# EUROPEAN PATENT SPECIFICATION

(11) **EP 4 315 070 B1**
(45) Date of publication and mention of the grant of the patent: **07.05.2025**
(21) Application number: 22712669.5
(22) Date of filing: 25.03.2022
(51) Int. Cl.: G06F 11/36, G06F 8/36

(54) **AUTOMATIC TESTING OF INTERRELATED COMPONENTS OF A SOFTWARE APPLICATION**
AUTOMATISCHE PRÜFUNG VON ZUSAMMENHÄNGENDEN KOMPONENTEN EINER SOFTWAREANWENDUNG
ESSAI AUTOMATIQUE DE COMPOSANTS INTERDÉPENDANTS D'UNE APPLICATION LOGICIELLE

(30) Priority: 29.03.2021 NL 2027854
(43) Date of publication of application: 07.02.2024
(73) Proprietor: Novulo R&D B.V., 7545 PP Enschede (NL)
(72) Inventor: WILLE, Frank, 7545 PP Enschede (NL); MINNEN, Wim, 7545 PP Enschede (NL)
(74) Representative: De Vries & Metman
(86) International application number: PCT/NL2022/050166
(87) International publication number: WO 2022/211618

(56) References cited:
- US-A1- 2008 115 116
- US-A1- 2019 155 721
- US-B1- 7 536 679

## Description

### FIELD OF THE INVENTION

The invention relates to a system for automatic testing of a software application while said software application is running.

The invention further relates to a method of automatic testing of a software application while said software application is running.

The invention also relates to a computer program product enabling a computer system to perform such a method.

### BACKGROUND OF THE INVENTION

To prevent regression, it is custom to automatically test every build or release of a software application. These tests typically comprise unit tests, which test the smallest functional units, and integration tests, which test the software application after integration of the functional units. Unit tests are often run before integration of the functional units, but can also be run after integration, as disclosed in US 7,062,753 B1.

US2008115116 discloses a system for automatic testing of a software application while said software application is running, said system comprising at least one processor configured to obtain a test script specification associated with a software component of said software application, said test script specification comprising a plurality of test steps, a test step of said plurality of test steps comprising a reference to a process definition stored in a catalog, said process definition not being implemented by said software component and to control said software application by simulating user input according to said test steps specified in said test script.

When testing packaged software with integration tests, it is custom to execute a plurality of tests scripts and check the results. These test scripts verify the functioning of the software application, possibly in different configurations, but test the same software application with the same interface and the same data structure each time.

When a software application is built from an application-specific subset of a collection of components, such an approach to integration testing is not possible. Since not every component is present in every software application, the interface and the data structure of different software applications are normally different. As a result, it would not be possible to perform the same integration test on different software applications.. A different integration test is therefore needed for each different software application. Manually creating all these different integration tests would be a lot of work and would be prone to risk of errors and failures.

### SUMMARY OF THE INVENTION

It is a first object of the invention to provide a system, which can automatically test the integration of a subset of a collection of software components in a running software application without a manually created integration test.

It is a second object of the invention to provide a method, which can be used to automatically test the integration of a subset of a collection of software components in a running software application without a manually created integration test.

In a first aspect of the invention, a system for automatic testing of a software application while said software application is running comprises at least one processor configured to obtain a test script specification associated with a software component of said software application, said test script specification comprising a plurality of test steps, a test step of said plurality of test steps comprising a reference to a process definition stored in a catalog, said process definition not being implemented by said software component, determine whether a further software component of said software application implements said process definition, create a new version of said test script specification in which said reference to said process definition has been replaced with a reference to an implementation of said process definition in said further software component if said further software component has been determined to implement said process definition, create a test script based on said new version of said test script specification, and control said software application by simulating user input according to said test steps specified in said test script.

Said software application is typically a web application. Said system may comprise a single device or multiple devices. Said software application may be running on another system while said software application is being controlled by simulating said user input. Alternatively, said software application may be running on said system while said software application is being controlled by simulating said user input. For example, said software application may run in a different virtual machine than software which controls said software application. Said software application may be running in a testing environment. Optionally, the catalog may comprise multiple sub catalogs, e.g. one maintained by a composer of the software application and one maintained by the developer of the platform.

When a composer is able to compose a software application by selecting a subset of components from a collection of software components, some of the selected components are normally interrelated. Rather than let the composer of the software application manually create an integration test, it is more beneficial to let the developer of the software component create one or more test script specifications that also test the interrelation of the software component with other components. These one or more test script specifications may be included in the software component.

When a composer is able to select, from a collection of components, the components that the composer wants to include in the software application, the composer often needs to assume the role of software developer and write glue code to let components interact. The glue code refers to the specific components selected by the composer. With certain (e.g. prescriptive low code) platforms, it is not necessary to write glue code. For example, a software component may refer to data types and process definitions stored in a catalog and the development platform can then search for one or more further software components which produces those data types and implements those process definitions, e.g. in the subset of components selected by the composer of the software application.

This way, robust and versatile software applications may be composed even by people without a software specialization, e.g. business analysts, consultants or key users. **In** the context of this patent application, any person composing a software application from pre-existing software components is referred to as a software composer. With such a (development) platform, when the selected components are integrated, a reference to a data type, specified in a component that consumes data of this data type, may be complemented with a reference to the (related) further component that produces data of this data type.

Moreover, with such a (development) platform, it becomes possible to let the developer of a software component create a test script specification that comprises a reference to a process definition which is not implemented in the software component itself. The developer of the software component selects this process definition from the catalog but does not know yet whether the composer of the software application will select any further software component that implements this process definition and if so, which one. If the composer of the software application selects a further software component that implements this process definition, the reference to the process definition is replaced, in a new version of the test script specification, during the integration/weaving step, with a reference to an implementation of this process definition in this further software component.

The test script created based on this new version of the test script specification can be used to automatically test the integration of the subset of the collection of software components in the running software application without a specific, manually created integration test. The automatic testing can be performed in an efficient manner, i.e. without wasting processor resources on checks as to whether a certain software component is present before executing a test step related to that component. A user interaction simulation software library may be used to perform the testing. For example, tools like Selenium WebDriver may be used to simulate the user input according to the test steps specified in the test script.

Thus, with this system, an automatic way of testing individually composed software applications is achieved, which is especially suitable for software applications which have been composed using Novulo's software components, plug-ins and datasets. This automatic way of testing may be used to save resources, avoid individually construed test scripts, and eliminate risks of errors and regression issues.

Said at least one processor may be configured to check whether said software application responds to said simulated user input in an unexpected manner and report results of said check. Said results may include a screen shot of the software application's user interface when an error occurred. Alternatively or additionally, said results may include a date/time stamp indicating when an error occurred, to allow the cause of the error to be determined more easily.

Said implementation of said process definition in said further software component may be associated with a field or button, said field or button may be associated with an identifier, and said at least one processor may be configured to find, based on said identifier, an element in a webpage produced by said running software application and control said software application by simulating user input to said field or button based on information associated with said element. By associating fields and/or buttons with (at least locally unique) identifiers and including these identifiers in the web pages produced by the software application, it becomes easy to locate the fields and/or buttons, even when the user interface changes. As a result, the system does not need to know the positions of the fields and/or buttons in the user interface.

Said implementation of said process definition in said further software component may be associated with a user interface plugin and with a test function in said user interface plugin and said at least one processor may be configured to find said test function in a webpage produced by said running software application and call said test function on said webpage. User interface plugins may be used for advanced user interface functionality. It is beneficial not to require a developer of a user interface plugin to define fields and/or buttons in the user interface. To still be able to test the functionality of the user interface plugins, the user interface plugins may implement test functions, which may be then called in the test steps.

Said at least one processor may be configured to search for said further software component in an application specification associated with said software application, said application specification specifying that said software application comprises one or more software components, said one or more software components including said software component. For example, a composer of a software application may first select the components that the composer wants to include in the software application, which will be specified in the application specification, and if the software component has been selected, a check may take place, e.g. as part of the integration process, whether the composer has selected a further software component which implements the process definition.

Said at least one processor may be configured to omit said test step from said new version of said test script specification if no further software component of said software application implements said process definition. For example, said at least one processor may be configured to omit said test step from said new version of said test script specification if no further software component of said software application implements said process definition and said test step has been marked as optional. Said at least one processor may be configured to generate an error message if no further software component of said software application implements said process definition and said test step has been marked as mandatory.

A further test step of said plurality of test steps may comprise a further reference to a process implemented in said software component and both said test script specification and said new version of said test script specification may comprise said further reference. Alternatively, the further test may comprise a further reference to a further process definition stored in said catalog, said further process definition being implemented by said software component, and said at least one processor may be configured to replace said further reference to said further process definition in said test script specification with a reference to an implementation of said further process definition in said software component in said new version of said test script specification. Thus, process definitions may be stored in the catalog for all processes, even for the processes used only by the software component itself.

Said process definition may be implemented by a process which has been associated with a button provided by said further software component or by a process which specifies that data needs to be entered into a field provided by said further software component, for example. The latter process may be implemented solely for the purpose of testing or also as part of a use-case process description included in the further software component. This use-case process definition may be used to create help information for users of the software application. Alternatively, said process definition may be implemented by a further test script specification included in said further software component, for example.

Said at least one processor may be configured to control said software application by simulating user input according to said test steps specified in said test script based on application-specific test data associated with said software application. For example, in one software application, the revenue in the sales ledger may be 8000 and in another software application, the revenue in the sales ledger may be 80000. One of the test steps in the test script may need this data to check whether the sale of a product entered in a previous test step has been booked correctly. Said application-specific test data may comprise a plurality of values. Each of these values may be associated with one of the test steps.

**In** a second aspect of the invention, a computer-implemented method of automatic testing of a software application while said software application is running comprises obtaining a test script specification associated with a software component of said software application, said test script specification comprising a plurality of test steps, a test step of said plurality of test steps comprising a reference to a process definition stored in a catalog, said process definition not being implemented by said software component, determining whether a further software component of said software application implements said process definition, creating a new version of said test script specification in which said reference to said process definition has been replaced with a reference to an implementation of said process definition in said further software component if said further software component has been determined to implement said process definition, creating a test script based on said new version of said test script specification, and controlling said software application by simulating user input according to said test steps specified in said test. The method may be performed by software running on a programmable device. This software may be provided as a computer program product.

Said method may comprise checking whether said software application responds to said simulated user input in an unexpected manner and reporting results of said check. Said results may include a screen shot of the software application's user interface when an error occurred. Alternatively or additionally, said results may include a date/time stamp indicating when an error occurred, to allow the cause of the error to be determined more easily.

Said implementation of said process definition in said further software component may be associated with a field or button, said field or button may be associated with an identifier, and said method may comprise finding, based on said identifier, an element in a webpage produced by said running software application and controlling said software application by simulating user input to said field or button based on information associated with said element.

Said implementation of said process definition in said further software component may be associated with a user interface plugin and with a test function in said user interface plugin and said method may comprise finding said test function in a webpage produced by said running software application and calling said test function on said webpage.

Said method may comprise searching for said further software component in an application specification associated with said software application, said application specification specifying that said software application comprises one or more software components, said one or more software components including said software component.

Said method may comprise omitting said test step from said new version of said test script specification if no further software component of said software application implements said process definition. For example, said method may comprise omitting said test step from said new version of said test script specification if no further software component of said software application implements said process definition and said test step has been marked as optional. Said method may comprise generating an error message if no further software component of said software application implements said process definition and said test step has been marked as mandatory.

A further test step of said plurality of test steps may comprise a further reference to a process implemented in said software component and both said test script specification and said new version of said test script specification may comprise said further reference. Alternatively, the further test may comprise a further reference to a further process definition stored in said catalog, said further process definition being implemented by said software component, and said method may comprise replacing said further reference to said further process definition in said test script specification with a reference to an implementation of said further process definition in said software component in said new version of said test script specification.

Said process definition may be implemented by a process which has been associated with a button provided by said further software component or by a process which specifies that data needs to be entered into a field provided by said further software component, for example.

Said method may comprise controlling said software application by simulating user input according to said test steps specified in said test script based on application-specific test data associated with said software application.

Moreover, a computer program for carrying out the methods described herein, as well as a non-transitory computer readable storage-medium storing the computer program are provided. A computer program may, for example, be downloaded by or uploaded to an existing device or be stored upon manufacturing of these systems.

A non-transitory computer-readable storage medium stores at least a first software code portion, the first software code portion, when executed or processed by a computer, being configured to perform executable operations for automatic testing of a software application while said software application is running.

The executable operations comprise obtaining a test script specification associated with a software component of said software application, said test script specification comprising a plurality of test steps, a test step of said plurality of test steps comprising a reference to a process definition stored in a catalog, said process definition not being implemented by said software component, determining whether a further software component of said software application implements said process definition, creating a new version of said test script specification in which said reference to said process definition has been replaced with a reference to an implementation of said process definition in said further software component if said further software component has been determined to implement said process definition, creating a test script based on said new version of said test script specification, and controlling said software application by simulating user input according to said test steps specified in said test.

As will be appreciated by one skilled in the art, aspects of the present invention may be embodied as a device, a method or a computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit", "module" or "system." Functions described in this disclosure may be implemented as an algorithm executed by a processor/microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples of a computer readable storage medium may include, but are not limited to, the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of the present invention, a computer readable storage medium may be any tangible medium that can contain, or store, a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object oriented programming language such as Java(TM), Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the present invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or a central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of devices, methods and computer program products according to various embodiments of the present invention. In this regard, each block in the flowchart or block diagrams may represent a module, segment, or portion of code, which comprises one or more executable instructions for implementing the specified logical function(s).

It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

### BRIEF DESCRIPTION OF THE DRAWINGS

These and other aspects of the invention are apparent from and will be further elucidated, by way of example, with reference to the drawings, in which:
Fig. 1 illustrates the operation of an example platform for composing a software application from software components;
Fig. 2 is a block diagram of a first embodiment of the system;
Fig. 3 is a block diagram of a second embodiment of the system;
Fig. 4 is a flow diagram of a first embodiment of the method;
Fig. 5 is a flow diagram of a second embodiment of the method;
Fig. 6 shows an example of an implementation of a regular process;
Fig. 7 shows an example of an implementation of a test process;
Fig. 8 is a flow diagram of a third embodiment of the method;
Fig. 9 is a flow diagram of a fourth embodiment of the method;
Fig. 10 shows an example of meta information specified in a process implementation which does not use a user interface plugin;
Fig. 11 shows an example of meta information specified in a process implementation which uses a user interface plugin;
Fig. 12 is a flow diagram of a fifth embodiment of the method;
Fig. 13 shows a test script being created and used in the platform of Fig. 1; and
Fig. 14 is a block diagram of an exemplary data processing system for performing the method of the invention.

### DETAILED DESCRIPTION OF THE DRAWINGS

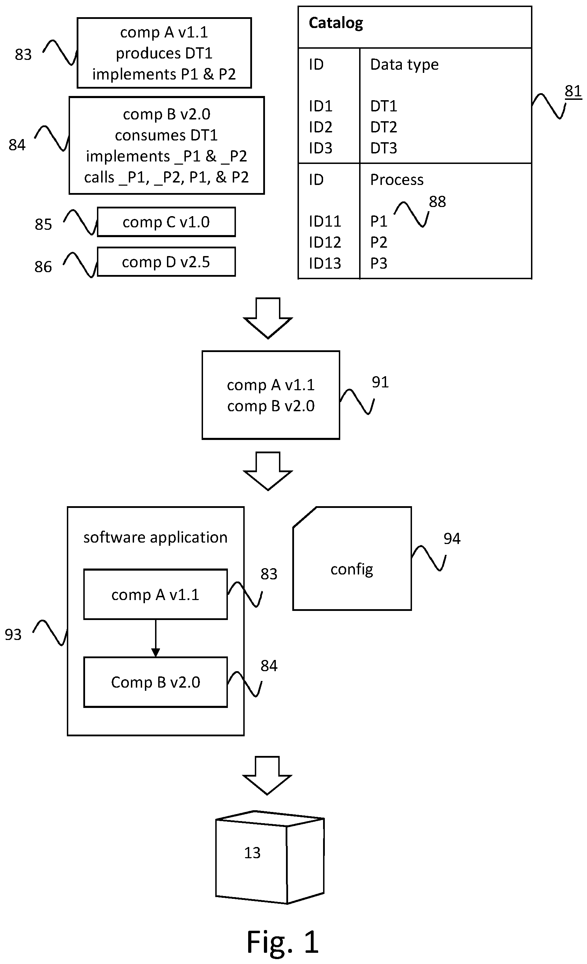

Fig. 1 illustrates the operation of an example platform for composing a software application from software components. With this example platform, a composer is able to compose a software application by selecting a subset of components from a collection of software components. With this example platform, it is not necessary to write glue code. Instead, a software component refers to data types and process definitions stored in a catalog and the development platform can then search for one or more further software components which produces those data types and implements those process definitions, e.g. in the subset of components selected by the composer of the software application.

Data types may be classified using an ontology. In computer science and information science, an ontology encompasses a representation, formal naming and definition of the categories, properties and relations between the concepts, data and entities that substantiate one, many, or all domains of discourse. More simply, an ontology is a way of showing the properties of a subject area and how they are related, by defining a set of concepts and categories that represent the subject.

The ontology may thus be used as a classification scheme. By classifying a real-world concept based on its properties and relations to other concepts, concepts that may initially appear to be rather different may be mapped onto the same data type. For example, both an insurance and a computer server may be described using the data type 'system' based on shared properties such as 'can be sold', 'has an owner', 'may be mutated after sale'. This way, the size of the catalogue is kept manageable, and reusability of data types is maximized. This, in turn, reduces resources needed for storage, maintenance and updating of data types. A data type typically corresponds to a concept, e.g. a 'person' or a 'currency' which describes the real world.

With this example platform, when the selected components are integrated, a reference to a data type, specified in a component that consumes data of this data type, may be complemented with a reference to the further component that produces data of this data type. This way, robust and versatile software applications may be composed even by people without a software specialization, e.g. business analysts, consultants or key users.

In the example of Fig. 1, four software components 83-86 have been developed by software developers and have been included in a component library. In practice, thousands of software components may be included in a component library. Furthermore, different versions of a software component may be included in the component library. In this description, the different versions of a software component are collectively referred to as a component family. In the example of Fig. 1, component 83 is version 1.1 of a component family A, component 84 is version 2.0 of a component family B, component 85 is version 1.0 of a component family C, and component 86 is version 2.5 of a component family D.

Each component produces one or more data types and/or consumes one or more data types. This is specified by the component developer. The component developer selects from a catalog which data types are produced by his software component and which data types are consumed by his software component. If the component developer wants his software component to produce a new data type, i.e., a data type not yet stored in the catalog, he typically needs to ask the owner of the catalog to add this data type to the catalog. Existing entries in a catalog are typically not modified, but the catalog can be extended with new entries.

In the example of Fig. 1, the catalog 81 comprises three data types DT1, DT2, and DT3. Each of the data types is associated with an identifier (ID1, ID2, and ID3 respectively in the example of Fig. 1). In the example of Fig. 1, component 83 produces data of data type DT1 and component 84 consumes data of data type DT1. For the sake of simplicity, Fig. 1 does not show which data types are consumed or produced by components 85 and 86. The identifier of DT1, i.e. ID1, is stored in the software components 83 and 84.

Each component implements one or more processes and typically multiple processes. For each process that should be callable by another component, a process definition is stored in the catalog. In the example of Fig. 1, no process definitions are stored in the catalog for processes that do not need to be callable by another component, but it would be possible to store process definitions for these processes as well. In the example of Fig. 1, the component 83 implements processes P1 and P2 that should be callable by other components and component 84 implements processes_P1 and _P2 that do not need to be callable by other components. Component 84 calls processes_P1, _P2, P1, and P2.

The component developer selects from a catalog which process definitions are called by his software component and which process definitions are implemented by his software component. If the component developer wants his software component to implement a new process type, he typically needs to ask the owner of the catalog to add this process definition to the catalog. In the example of Fig. 1, the developer of component 84 does not need to select process definitions for processes _P1 and _P2, as they do not need to be called by other components and are therefore not stored in catalog 81.

For the sake of simplicity, Fig. 1 does not show which processes are implemented and called by components 85 and 86 or which processes are called by component 83. In the example of Fig. 1, the catalog 81 comprises three process definitions: a process definition 88 for P1 and process definitions for P2 and P3. Each of the process definitions is associated with an identifier (ID11, ID12, and ID13 respectively in the example of Fig. 1).

A composer can select the software components that he wishes to include in his software application from the component library. This results in an application specification. A typical application specification comprises tens to hundreds of software components. In the example of Fig. 1, the composer first selects a component 84 that consumes data of data type DT1 and then selects a component 83 that produces data of this data type DT1. This is reflected in the application specification 91. In general, there may be multiple components in the component library that produce data of the same data type. If a data type is consumed by a component in the application specification, there must be exactly one component that produces that data type in the application specification. There is no limit on the number of components in the application specification that consumes a given data type.

After the composer has selected the desired components, he can instruct the system to weave the components into an integrated software application. In the example of Fig. 1, the system creates a software application 93 and further creates a configuration 94. In the example of Fig. 1, the components 83 and 84 are weaved together in order to create the software application 93. As part of this process, the reference to the data type DT1 in component 84 is replaced by a reference to the implementation of that data type in component 83. Next, code may be generated based on the results of this weaving process. Alternatively, a runnable model may be generated based on the results of this weaving process. This runnable model is run by a model interpreter without generating intermediate code.

Thus, the created software application comprises code or a runnable model. In the created software application, the individual components may no longer be distinguishable for the end-user. Even in this case, it may still be possible to for the composer to distinguish the individual components. For example, the server running the software application may offer a user interface which identifies each software component uniquely.

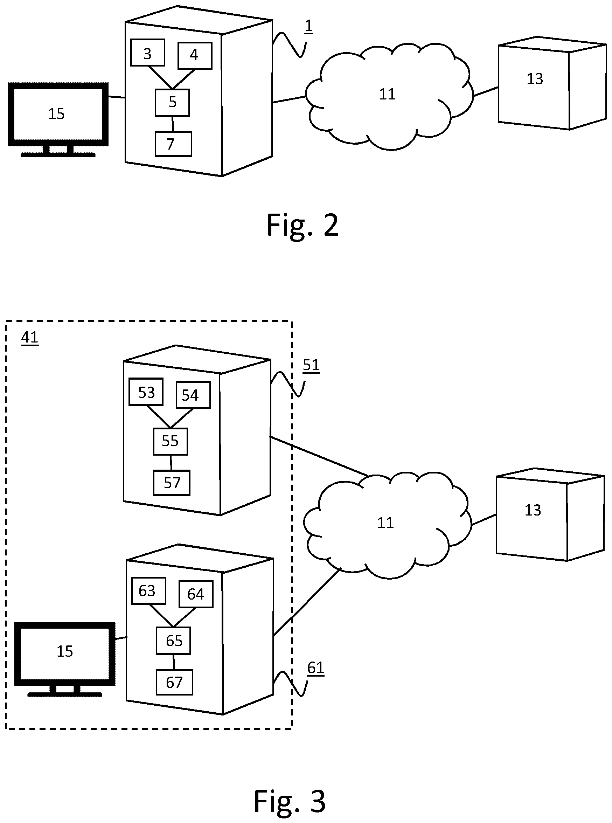

In the example of Fig. 2, the created software application is transferred to a system 13 where the software application is deployed. System 13 executes the code or interprets the model of the software application. In other examples, the software application may be deployed on the same system where the software application was composed. The software application is typically a web application. The software application may run on a server and may be used using a client device connected to the server.

With, for example, the platform of Fig. 1, it becomes possible to automatically generate a test script from the selected/integrated components and to use this test script to automatically test the integration of the subset of the collection of software components in the running software application without a specific, manually created integration test.

Fig. 2 shows a first embodiment of the system for automatic testing of a software application while the software application is running. In this first embodiment, the system is a computer 1. In the example of Fig. 2, the software application is running on a server 13. The computer 1 and the server 13 are connected via the Internet 11. A composer uses the computer 1 and a monitor 15 connected to the computer 1 to create the software application.

The computer 1 comprises a receiver 3, a transmitter 4, a processor 5, and storage means 7. The processor 5 is configured to obtain a test script specification associated with a software component of the software application. The test script specification may be included in the software component. The test script specification comprises a plurality of test steps. A test step of the plurality of test steps comprises a reference to a process definition stored in a catalog. The process definition is not implemented by the software component.

The processor 5 is further configured to determine whether a further software component of the software application implements the process definition, create a new version of the test script specification in which the reference to the process definition has been replaced with a reference to an implementation of the process definition in the further software component if the further software component has been determined to implement the process definition.

The processor 5 is further configured to create a test script based on the new version of the test script specification and control the software application running on server 13 by simulating user input according to the test steps specified in the test script.

With platforms such as the one shown in Fig. 1, it becomes possible to let the developer of a software component create a test script specification that comprises a reference to a process definition which is not implemented in the software component itself. The developer of the software component selects this process definition from the catalog but does not know yet whether the composer of the software application will select any further software component that implements this process definition and if so, which one.

If the composer of the software application selects a further software component that implements this process definition, the reference to the process definition is replaced, in a new version of the test script specification, during the integration/weaving step, with a reference to an implementation of this process definition in this further software component.

With this system, an automatic way of testing individually composed software applications is achieved, which is especially suitable for software applications which have been composed using Novulo's software components, plug-ins and datasets. This automatic way of testing may be used to save resources, avoid individually construed test scripts, and eliminate risks of errors and regression issues.

A user interaction simulation software library may be used to perform the testing. For example, tools like Selenium WebDriver may be used to simulate the user input according to the test steps specified in the test script.

In addition to the new version of the test script specification, one or more further versions of the test script specification may be generated as part of the process of creating the test script from the test script specification. In addition to being based on the new version of the test script specification, the test script may be based on the configuration 94 of Fig. 1.

The test script specification is typically a modelled process that comprises other processes and actions which represent the user interaction and checks that should be performed consecutively. The new version of the test script specification may be a representation in code of that process, which may comprise two lists per process: the processes/actions that it comprises and the transitions between these actions. Based on this new version, the user may be asked to provide application-specific test data and the test script may then be created. The test script may comprise generated XML files with the test steps that need to be performed and the corresponding test data.

In the embodiment of Fig. 2, the software components are integrated by computer 1 and computer 1 is also used to control the software application running on server 13 by simulating user input according to the test steps specified in the test script.

In the embodiment of Fig. 3, the system 41 comprises a computer 61 and a server 51. The computer 61 comprises a receiver 63, a transmitter 64, a processor 65, and storage means 67. The server 51 comprises a receiver 53, a transmitter 54, a processor 55, and storage means 57.

The processor 55 of the server 51 is configured to obtain the test script specification associated with the software component, determine whether a further software component of the software application implements the process definition, create the new version of the test script specification in which the reference to the process definition has been replaced with a reference to an implementation of the process definition in the further software component if the further software component has been determined to implement the process definition, and create the test script based on the new version of the test script specification.

The processor 65 of the computer 61 is configured to obtain the test script and control the software application running on server 13 by simulating user input according to the test steps specified in the test script. The computer 61 may obtain the test script from the server 13, for example, after the software application has been transferred to the server 13, and typically after the user has entered application-specific test data. Alternatively, the computer 61 may obtain the test script from the server 51, for example.

In an alternative embodiment, the processor 55 of the server 51 is configured to control the software application running on server 13 by simulating user input according to the test steps specified in the test script and the computer 61 and the monitor 15 are only used as interface to the server 51.

In the embodiment of the computer 1 shown in Fig. 2, the computer 61 shown in Fig. 3, and the server 51 shown in Fig. 3, the device comprises one processor 5, 55, or 65. In an alternative embodiment, the device comprises multiple processors. The processor 5, 55, or 65 may be a general-purpose processor, e.g. from Intel or AMD, or an application-specific processor. The processor 5, 55, or 65 may run a Windows or Unix-based operating system for example. The storage means 7, 57, or 67 may comprise one or more memory units. The storage means 7, 57, or 67 may comprise one or more hard disks and/or solid-state memory, for example. The storage means 7, 57, or 67 may be used to store an operating system, applications and application data, for example.

The receiver 3, 53, or 63 and the transmitter 4, 54, or 64 may use one or more wired and/or wireless communication technologies such as Ethernet and/or Wi-Fi (IEEE 802.11) to communicate with other devices via the Internet 11. In an alternative embodiment, multiple receivers and/or multiple transmitters are used instead of a single receiver and a single transmitter. In the embodiments shown in Figs. 2 and 3, a separate receiver and a separate transmitter are used. In an alternative embodiment, the receiver and the transmitter are combined into a transceiver. The device may comprise other components typical for a computer/server such as a power connector. The invention may be implemented using a computer program running on one or more processors.

Preferably, the software application does not run on the system that controls the software application by simulating user input according to the test steps specified in the test script, but this is not excluded. **In** the latter case, the software application preferably runs on a different virtual machine.

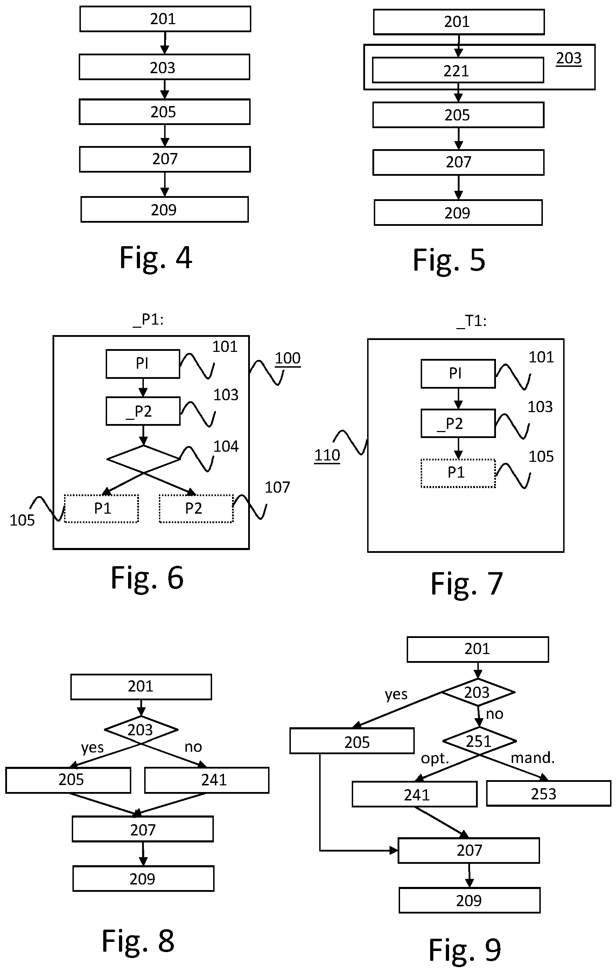

A first embodiment of the method of computer-implemented method of automatic testing of a software application while the software application is running is shown in Fig. 4. The method may be performed by the computer 1 of Fig. 2 or the computers 51 and 61 of Fig. 3, for example.

A step 201 comprises obtaining a test script specification associated with a software component of the software application. The test script specification comprises a plurality of test steps and a test step of this plurality of test steps comprises a reference to a process definition stored in a catalog. This process definition is not implemented by the software component. The test script specification may be included in the software component itself.

A step 203 comprises determining whether a further software component of the software application implements the process definition. A step 205 comprises creating a new version of the test script specification in which the reference to the process definition has been replaced with a reference to an implementation of the process definition in the further software component if the further software component has been determined (in step 203) to implement the process definition.

A step 207 comprises creating a test script based on the new version of the test script specification, which was created in step 205. A step 209 comprises controlling the software application by simulating user input according to the test steps specified in the test script, which was created in step 207.

A second embodiment of the method of computer-implemented method of automatic testing of a software application while the software application is running is shown in Fig. 5. This second embodiment is an extension of the first embodiment of Fig. 4. **In** the embodiment of Fig. 5, step 203 of Fig. 4 is implemented by a step 221.

Step 221 comprises searching for the further software component in an application specification associated with the software application. The application specification specifies that the software application comprises one or more software components. The one or more software components include the software component. An example of such an application specification is application specification 91 of Fig. 1.

The process definition referred to in the test step may be, for example, a use-case process definition or a test process definition. A use-case process definition is referred to in a use case. User instructions for using the software application may be automatically generated from such use cases and thus from the processes implemented in such use cases. A test process definition is used for a process that is defined for the purpose of testing. The catalog may further comprise regular process definitions. A regular process definition is used for a process that can be performed during normal execution of the software application.

An implementation of a process definition may refer to another process definition and/or to an internal process (for which no process definition is stored in the catalog). For example, for use-case and test process definitions, there may be level 2 processes that correspond to scenarios, level 3 processes that correspond to scenario steps, and level 4 processes that correspond to simple actions.

Fig. 6 shows an example of an implementation 100 of a level 2 use-case process in component 84 of Fig. 1. The process implementation _P1 comprises three subprocesses 103, 105, and 107. An implementation of a user-case process may include a choice between multiple subprocesses. **In** the example of Fig. 6, either process 105 or process 107 is chosen in dependence on the outcome of choice 104.

Subprocess 103 is an internal process _P2 implemented in component 84. Subprocesses 105 and 107 are processes P1 and P2 defined in the catalog and not implemented in component 84 but by component 83 of Fig. 1. The first block 101 is a process information block PI that comprises meta information. This implementation 100 can beneficially be used to automatically generate user instructions for using the software application, i.e. for using the functionality relating to the component 84.

Fig. 7 shows an example of an implementation 110 of a test process in component 84 of Fig. 1. The process implementation _T1 comprises two of the three subprocesses 103, 105, and 107 of implementation 100 of the user-case process: processes 103 and 105. A main difference between a test process and a use-case process is that the test process comprises a sequence of processes, i.e. a sequence of test steps, and no choices. For that reason, implementation 110 only comprises one of processes 105 and 107. Another test process definition may have an implementation that comprises step 107 instead of step 105. The test process starts with the same process information block 101 as the regular process. After block 101, processes 103 and 105 are specified in sequence.

**In** the example of Fig. 7, the subprocess 105 may be associated with a button provided by the software component 83 or may specify, e.g. in an information process block of the subprocess, that data needs to be entered into a field provided by the software component 83. The subprocess 105 may be implemented by a test script specification/process included in the further software component 83.

Since test step 103 refers to a process implemented in the software component 84 itself, both the test script specification obtained in step 201 and the new version of the test script specification created in step 205 can comprise the same reference to process 103 (_P2).

A third embodiment of the method of computer-implemented method of automatic testing of a software application while the software application is running is shown in Fig. 8. This second embodiment is an extension of the first embodiment of Fig. 4. Fig. 4 only shows what happens if it is determined in step 203 that a further software component of the software application implements the process definition, i.e. that step 105 is performed in this case.

Fig. 8 shows what could happen if it is determined in step 203 that no further software component of the software application, e.g. no further component included in the application specification, implements the process definition. **In** this case, a step 241 is performed in the embodiment of Fig. 8. Step 241 comprises creating a new version of the test script specification in which the test step is omitted. After step 205 or step 241 has been performed, steps 207 and 209 are performed as described in relation to Fig. 4.

A fourth embodiment of the method of computer-implemented method of automatic testing of a software application while the software application is running is shown in Fig. 9. This fourth embodiment is a variation on the third embodiment of Fig. 8. If it is determined in step 203 that no further software component of the software application implements the process definition, a step 251 is performed after step 203.

Step 251 comprises determining whether the test step has been marked as mandatory or optional. If the test step has been marked as optional, step 241 of Fig. 8 is performed. If the test step has been marked as mandatory, a step 253 is performed. Step 253 comprises generating an error message. After getting an error message, the composer of the software application could include a further software component which implements the process definition in the software application and cause the method to restart at step 201.

The implementation of the process definition in the further software component may be associated with a field or button. This association may be specified in a process information block, for example. Similar associations may be specified in a process information block of the software component.

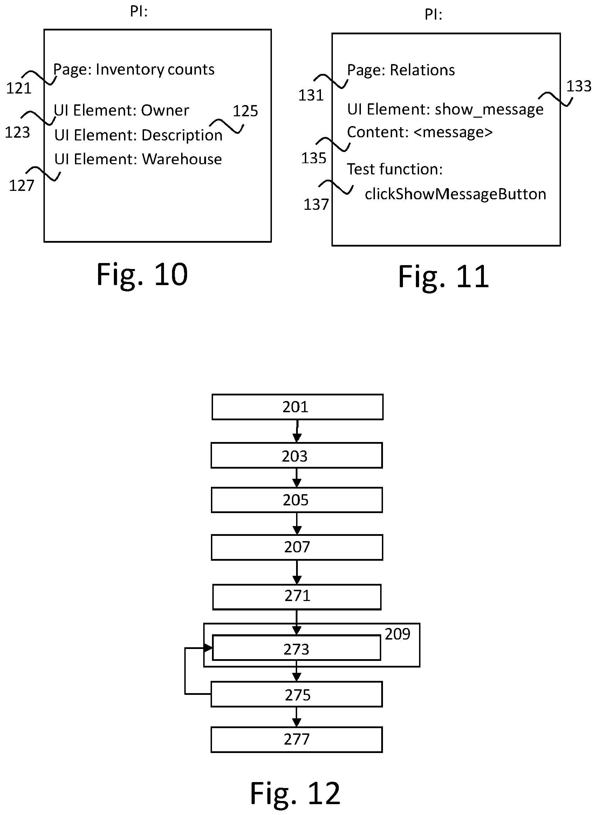

Fig. 10 shows an example of meta information specified in a process implementation which does not use a user interface plugin. **In** the example of Fig. 10, the process information of a process in the software component specifies that the (use-case or test) process is executed on a page 121 titled "Inventory Counts" comprises three UI elements 123, 125, and 127. These UI elements 123, 125, and 127 are fields titled "Owner", "Description", and "Warehouse", respectively. Similarly, the process may refer to a process definition which is implemented by the further software component and the process information block of this implementation may comprise a field titled "Journal entry scheme".

Each of the UI elements is associated with an identifier. For example, UI element 123 may be associated with the identifier 65660 and the field titled "Journal entry scheme" may be associated with the identifier 11763. As previously described, components may also be associated with identifiers. For example, the software component may be associated with the identifier "556b2105-24e2-4695-84bf-f87d9c5982ab" and the further software component may be associated with the identifier "497f09c1-1faf-459e-bba7-db3ea8c877c4". If a process has been associated with a button (not shown in Fig. 10), this button may also be associated with an identifier. An example of an XML test script for the process is listed below:

```
 <?xml version="1.0"?>
 <testscenario description="Inventory count" startpagekey="556b2105-24e2-4695-84bf-
 f87d9c5982ab:10013" record="businessprocessscenarios:load(3)">
 <scenariosteps>
  <scenario step sequence="10" record="businessprocessscenariosteps:load(125)">
   <scenariostepactions>
    <scenariostepaction sequence="10" type="ClickButton"
     structureid="556b2105-24e2-4695-84bf-f87d9c5982ab: 15059" />
    <scenariostepaction sequence="20" type="SearchLinkInput"
     structureid="556b2105-24e2-4695-84bf-f87d9c5982ab:65660">
     <value>(//scenariostepactiondata[@structurekey="556b2105-24e2-4695-84bf-
     f87d9c5982ab:65660"])[1]/value</value>
     <searchlinkgridinfo>
     <findcolumnvalue>(//scenariostepactiondata[@structurekey="556b2105-
     24e2-4695-84bf-f87d9c5982ab:65660"])[1]/searcheolumnvalue</findcolumnvalue>
      <findcolumnfield>this$contact_name$$</findcolumnfield>
     </searchlinkgridinfo>
    </scenariostepaction>
    <scenariostepaction sequence="30" type="TypeInTextField"
     structureid="556b2105-24e2-4695-84bf f87d9c5982ab:13227">
     <value>(//scenariostepactiondata[@structurekey="556b2105-24e2-4695-84bf-
     f87d9c5982ab:13227"])[1]/value</value>
    </scenariostepaction>
    <scenariostepaction sequence="40" type="SearchLinkInput"
     structureid="556b2105-24e2-4695-84bf f87d9c5982ab:1463402" usedefaultvalue="true"
     />
    <scenariostepaction sequence="50" type="SearchLinkInput"
     structureid="497f09c1-1faf-459e-bba7-db3ea8c877c4:11763" usedefaultvalue="true" />
    <scenariostepaction sequence="60" type="ClickButton"
     structureid="556b2105-24e2-4695-84bf-f87d9c5982ab: 13175" />
   </scenariostepactions>
  </scenariostep>
```

The above steps describe which UI elements needs to be clicked or filled-in consecutively and comprise references to data fields in the datafile (//scenariostepactiondata) from where the data to be filled in can be obtained. An example of such a data file is listed below:

```
 <?xml version="1.0"?>
 <testscenariodata description="Inventory count">
 <metadata>...</metadata>
 <scenariostepdatas>
  <scenariostepdata>
   <scenariostepactiondatas>
    <scenariostepactiondata structurekey="556b2105-24e2-4695-84bf-f87d9c5982ab:65660">
     <value>Name of company</value>
    </scenariostepactiondata>
    <scenariostepactiondata structurekey="556b2105-24e2-4695-84bf-f87d9c5982ab:13227">
     <value>Automatic Test demo Inventory Count</value>
    </scenariostepactiondata>
   </scenariostepactiondatas>
  </scenariostepdata>
```

Step 209 of Figs. 4, 5, 8 and/or 9 may comprise finding, based on the identifier, an element in a webpage produced by the running software application and controlling the software application by simulating user input to the field or button based on information associated with the element. A testrunner may process the 'scenariostepaction' elements from the script one by one. For example, for the step with sequence number 30 of type 'TypeInTextField', the testrunner may search for the element with id '556b2105-24e2-4695-84bf-f87d9c5982ab: 13227'. When a software application is started in test-mode, these IDs are included in the html source code to make them easy to find.

Instead of, or in addition to, specifying own fields and/or buttons, a process may a user interface plug-in to interact with the user. In this case, a test function may be specified in a process information block of subprocess 105 or subprocess 107 of Fig. 7, for example. Fig. 11 shows an example of meta information specified in a process implementation which uses a user interface plugin.

In the example of Fig. 11, the process information specifies that a page 131 titled "Relations" comprises a UI element 133 which specifies a function titled show_message, which is associated with a button, message content 135 for that function, and a test function 137 titled "clickShowMessageButton". Step 209 of Figs. 4, 5, 8 and/or 9 may comprise finding this test function 137, i.e. the name "clickShowMessageButton", in a webpage produced by the running software application and call the test function 137 on the webpage. The test function 137 may be a JavaScript function, for example.

Examples of user interface plugins are a calendar and a WYSIWYG text editor. A plug-in generally comprises one or more DLLs and an XML file that describes how the platform should deal with the plug-in. The XML file may also describe how a component developer should configure the plug-in. For example, in a calendar plug-in, a developer may need to configure the data type of appointments and configure which fields of the appointments contain start time and end time. An example of such a step in the scenariofile is listed below:

```
 <scenariostepaction sequence=" 10" type="TestFunction"
 structureid="12345678-9abc-def0-1234-56789abcdef0: 123456">
 <testfunction>clickShowMessageButton</testfunction>
 <testparameter>add</testparameter>
 </scenariostepaction
```

In this case, the structureid is optional, as not every plug-in is represented by a UI element that appears on the page. A plug-in normally ensures that the test functions they offer are registered in JavaScript, e.g. as window.novulo.tests.<pluginname>.

```
 <functionname>. In this case, the testrunner may call:
 var result =
 window.novulo.tests['novulomessageextensions']['clickShowMessageButton']('add');
```

Calling a test function typically results in an object with at least an attribute "success" and if the value of this attribute is false, an attribute "error". In this case, {"success": true} or {"success": false, "error": "Button 'add' not found."} may be returned. Depending on this result, the test may proceed, or a failure of the test may be reported.

A fifth embodiment of the method of computer-implemented method of automatic testing of a software application while the software application is running is shown in Fig. 12. This fifth embodiment is an extension of the first embodiment of Fig. 4. In the embodiment of Fig. 12, steps 271, 273, 275, and 277 are performed after step 207. Step 209 of Fig. 4 is implemented by step 273.

Step 271 comprises obtaining application-specific test data associated with the software application. The application-specific test data is typically provided by the composer of the software application. Step 273 comprises controlling the software application by simulating user input according to the test steps specified in the test script, which was created in step 207, based on application-specific test data obtained in step 271.

Step 275 is performed after each test step performed in step 273. Step 275 comprises determining whether the software application responds to the simulated user input in an unexpected manner. If so, this response is stored in memory, at least temporarily. Steps 273 and 275 are repeated until all test steps have been performed.

After all test steps have been performed, step 277 is performed. Step 277 comprises reporting the results of the check in step 275. Step 277 may comprise obtaining stored response information or even a stored report. The results may comprise a screen shot of the software application's user interface when an error occurred and/or a date/time stamp indicating when an error occurred.

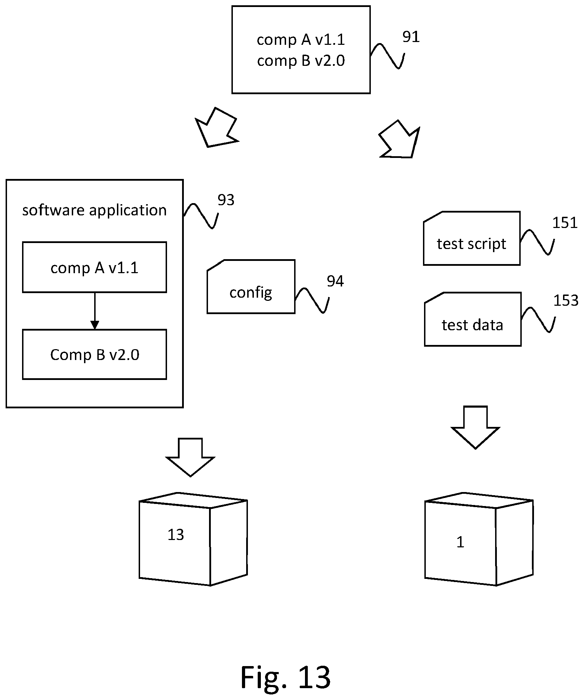

Fig. 13 shows a test script 151 being created and used in the platform of Fig. 1. The test script 151 is created when the components 83 and 84 specified in the application specification 91 are weaved together in order to create the software application 93 or at a later time. This test script 151 is used by system 1 of Fig. 2 to control the software application 93 which runs on system 13 and uses configuration 94. The system 1 also uses application-specific test data 153, as described in relation to step 273 of Fig. 12.

For example, after the software application 93 has been transferred to the system 13, a user may be able to use the software application 93 itself to enter application-specific test data 153. The user may then use an application running on system 13 to generate the test script 151 and transfer this test script 151 to system 1. If the test script 151 does not include the application-specific test data 153, the application-specific test data 153 may be transferred to system 1 separately.

The embodiments of Figs. 4-5, 8-9, and 12 differ from each other in multiple aspects, i.e. multiple steps have been added or replaced. In variations on these embodiments, only a subset of these steps is added or replaced and/or one or more steps is omitted. For example, the embodiment of Fig. 5 may be combined with the embodiment of Fig. 8 or 9 and/or with the embodiment of Fig. 12.

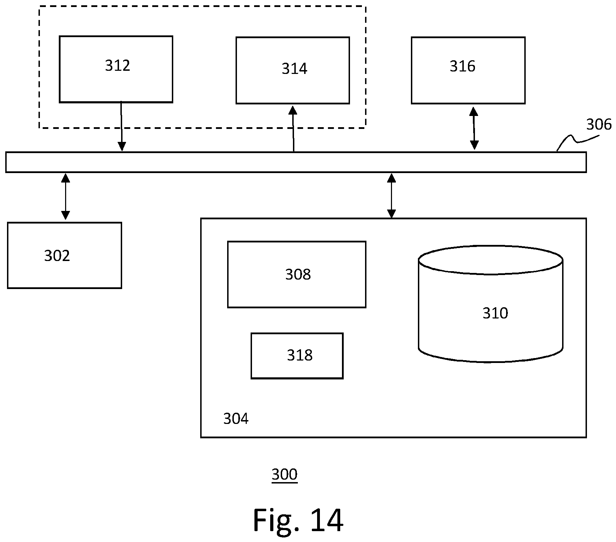

Fig. 14 depicts a block diagram illustrating an exemplary data processing system that may perform the method as described with reference to Figs. 4-5, 8-9, and 12.

As shown in Fig. 14, the data processing system 300 may include at least one processor 302 coupled to memory elements 304 through a system bus 306. As such, the data processing system may store program code within memory elements 304. Further, the processor 302 may execute the program code accessed from the memory elements 304 via a system bus 306. In one aspect, the data processing system may be implemented as a computer that is suitable for storing and/or executing program code. It should be appreciated, however, that the data processing system 300 may be implemented in the form of any system including a processor and a memory that is capable of performing the functions described within this specification.

The memory elements 304 may include one or more physical memory devices such as, for example, local memory 308 and one or more bulk storage devices 310. The local memory may refer to random access memory or other non-persistent memory device(s) generally used during actual execution of the program code. A bulk storage device may be implemented as a hard drive or other persistent data storage device. The processing system 300 may also include one or more cache memories (not shown) that provide temporary storage of at least some program code in order to reduce the number of times program code must be retrieved from the bulk storage device 310 during execution.

Input/output (I/O) devices depicted as an input device 312 and an output device 314 optionally can be coupled to the data processing system. Examples of input devices may include, but are not limited to, a keyboard, a pointing device such as a mouse, or the like. Examples of output devices may include, but are not limited to, a monitor or a display, speakers, or the like. Input and/or output devices may be coupled to the data processing system either directly or through intervening I/O controllers.

In an embodiment, the input and the output devices may be implemented as a combined input/output device (illustrated in Fig. 14 with a dashed line surrounding the input device 312 and the output device 314). An example of such a combined device is a touch sensitive display, also sometimes referred to as a "touch screen display" or simply "touch screen". In such an embodiment, input to the device may be provided by a movement of a physical object, such as e.g. a stylus or a finger of a user, on or near the touch screen display.

A network adapter 316 may also be coupled to the data processing system to enable it to become coupled to other systems, computer systems, remote network devices, and/or remote storage devices through intervening private or public networks. The network adapter may comprise a data receiver for receiving data that is transmitted by said systems, devices and/or networks to the data processing system 300, and a data transmitter for transmitting data from the data processing system 300 to said systems, devices and/or networks. Modems, cable modems, and Ethernet cards are examples of different types of network adapter that may be used with the data processing system 300.

As pictured in Fig. 14, the memory elements 304 may store an application 318. In various embodiments, the application 318 may be stored in the local memory 308, he one or more bulk storage devices 310, or separate from the local memory and the bulk storage devices. It should be appreciated that the data processing system 300 may further execute an operating system (not shown in Fig. 14) that can facilitate execution of the application 318. The application 318, being implemented in the form of executable program code, can be executed by the data processing system 300, e.g., by the processor 302. Responsive to executing the application, the data processing system 300 may be configured to perform one or more operations or method steps described herein.

Various embodiments of the invention may be implemented as a program product for use with a computer system, where the program(s) of the program product define functions of the embodiments (including the methods described herein). In one embodiment, the program(s) can be contained on a variety of non-transitory computer-readable storage media, where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state random-access semiconductor memory) on which alterable information is stored. The computer program may be run on the processor 302 described herein.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

## Claims

1. A system (1,41) for automatic testing of a software application (93) while said software application (93) is running, said system (1,41) comprising at least one processor (5,55,65) configured to:
- obtain a test script specification (110) associated with a software component (84) of said software application (93), said test script specification comprising a plurality of test steps (101-107), a test step (105) of said plurality of test steps (101-107) comprising a reference to a process definition (88) stored in a catalog (81), said process definition (88) not being implemented by said software component (84),
- determine whether a further software component of said software application (93) implements said process definition (88),
- create a new version of said test script specification (110) in which said reference to said process definition (88) has been replaced with a reference to an implementation of said process definition (88) in said further software component (83) if said further software component (83) has been determined to implement said process definition (88),
- create a test script (105) based on said new version of said test script specification, and
- control said software application (93) by simulating user input according to said test steps specified in said test script (105).

2. A system (1,41) as claimed in claim 1, wherein said software application (93) is running on another system (13) while said software application (93) is being controlled by simulating said user input.

3. A system (1,41) as claimed in claim 1 or 2, wherein said implementation of said process definition (88) in said further software component (83) is associated with a field (123-127) or button, said field (123-127) or button is associated with an identifier, and said at least one processor (5,55,65) is configured to find, based on said identifier, an element in a webpage produced by said running software application (93) and control said software application by simulating user input to said field (123-127) or button based on information associated with said element.

4. A system (1,41) as claimed in any one of the preceding claims, wherein said implementation of said process definition (88) in said further software component (83) is associated with a user interface plugin and with a test function (137) in said user interface plugin and said at least one processor (5,55,65) is configured to find said test function (137) in a webpage produced by said running software application (93) and call said test function (137) on said webpage.

5. A system (1,41) as claimed in any one of the preceding claims, wherein a further test step (103) of said plurality of test steps (101-107) comprises a further reference to a process implemented in said software component (84) and both said test script specification (110) and said new version of said test script specification comprise said further reference.

6. A system (1,41) as claimed in any one of the preceding claims, wherein said at least one processor (5,55,65) is configured to omit said test step (105) from said new version of said test script specification if no further software component of said software application (93) implements said process definition.

7. A system (1,41) as claimed in claim 6, wherein said at least one processor (5,55,65) is configured to omit said test step (105) from said new version of said test script specification if no further software component of said software application (93) implements said process definition (88) and said test step (105) has been marked as optional and generate an error message if no further software component of said software application implements said process definition (88) and said test step (105) has been marked as mandatory.

8. A system (1,41) as claimed in any one of the preceding claims, wherein said software component (84) includes said test script specification (110).

9. A system (1,41) as claimed in any one of the preceding claims, wherein said process definition (88) is implemented by a process which has been associated with a button provided by said further software component (83) or by a process which specifies that data needs to be entered into a field (123-127) provided by said further software component (83).

10. A system (1,41) as claimed in any one of claims 1 to 8, wherein said process definition (88) is implemented by a further test script specification included in said further software component (83).

11. A system (1,41) as claimed in any one of the preceding claims, wherein said at least one processor (5,55,65) is configured to search for said further software component in an application specification (91) associated with said software application (93), said application specification (91) specifying that said software application (93) comprises one or more software components (83,84), said one or more software components (83,84) including said software component (84).

12. A system (1,41) as claimed in any one of the preceding claims, wherein said at least one processor (5,55,65) is configured to control said software application (93) by simulating user input according to said test steps specified in said test script (151) based on application-specific test data (153) associated with said software application (93).

13. A system (1,41) as claimed in any one of the preceding claims, wherein said at least one processor (5,55,65) is configured to check whether said software application (93) responds to said simulated user input in an unexpected manner and report results of said check.

14. A computer-implemented method of automatic testing of a software application while said software application is running, said method comprising:
- obtaining (201) a test script specification associated with a software component of said software application, said test script specification comprising a plurality of test steps, a test step of said plurality of test steps comprising a reference to a process definition stored in a catalog, said process definition not being implemented by said software component;
- determining (203) whether a further software component of said software application implements said process definition;
- creating (205) a new version of said test script specification in which said reference to said process definition has been replaced with a reference to an implementation of said process definition in said further software component if said further software component has been determined to implement said process definition;
- creating (207) a test script based on said new version of said test script specification; and
- controlling (209) said software application by simulating user input according to said test steps specified in said test script.

15. A computer program or suite of computer programs comprising at least one software code portion or a computer program product storing at least one software code portion, the software code portion, when run on a computer system, being configured for performing the method of claim 14.

## Patentansprüche

1. System (1,41) zur automatischen Prüfung einer Softwareanwendung (93), während die Softwareanwendung (93) ausgeführt wird, wobei das System (1,41) mindestens einen Prozessor (5,55,65) umfasst, der konfiguriert ist, um:
- eine Testskriptspezifikation (110), die mit einer Softwarekomponente (84) der Softwareanwendung (93) verknüpft ist, zu erhalten, wobei die Testskriptspezifikation eine Vielzahl von Testschritten (101-107) umfasst, wobei ein Testschritt (105) der Vielzahl von Testschritten (101-107) einen Verweis auf eine Prozessdefinition (88) enthält, die in einem Katalog (81) gespeichert ist und nicht von der Softwarekomponente (84) implementiert wird,
- zu bestimmen, ob eine weitere Softwarekomponente der Softwareanwendung (93) die Prozessdefinition (88) implementiert,
- eine neue Version der Testskriptspezifikation (110) zu erstellen, in der der Verweis auf die Prozessdefinition (88) durch einen Verweis auf eine Implementierung der Prozessdefinition (88) in der weiteren Softwarekomponente (83) ersetzt wurde, wenn festgestellt wurde, dass die weitere Softwarekomponente (83) die Prozessdefinition (88) implementiert,
- ein Testskript (105) basierend auf der neuen Version der Testskriptspezifikation zu erstellen, und
- die Softwareanwendung (93) durch Simulation von Benutzereingaben gemäß den im Testskript (105) angegebenen Testschritten zu steuern.

2. System (1,41) nach Anspruch 1, wobei die Softwareanwendung (93) auf einem anderen System (13) ausgeführt wird, während die Softwareanwendung (93) durch Simulation der Benutzereingaben gesteuert wird.

3. System (1,41) nach Anspruch 1 oder 2, wobei die Implementierung der Prozessdefinition (88) in der weiteren Softwarekomponente (83) mit einem Feld (123-127) oder einer Schaltfläche verknüpft ist, wobei das Feld (123-127) oder die Schaltfläche mit einer Kennung verknüpft ist, und wobei der mindestens eine Prozessor (5,55,65) konfiguriert ist, basierend auf der Kennung ein Element in einer von der ausgeführten Softwareanwendung (93) erzeugten Webseite zu finden und die Softwareanwendung durch Simulation von Benutzereingaben an das Feld (123-127) oder die Schaltfläche basierend auf Informationen zu dem Element zu steuern.

4. System (1,41) nach einem der vorhergehenden Ansprüche, wobei die Implementierung der Prozessdefinition (88) in der weiteren Softwarekomponente (83) mit einem Benutzeroberflächen-Plugin und mit einer Testfunktion (137) in dem Benutzeroberflächen-Plugin verknüpft ist und der mindestens eine Prozessor (5,55,65) konfiguriert ist, um die Testfunktion (137) in einer von der ausgeführten Softwareanwendung (93) erzeugten Webseite zu finden und die Testfunktion (137) auf der Webseite aufzurufen.

5. System (1,41) nach einem der vorhergehenden Ansprüche, wobei ein weiterer Testschritt (103) der Vielzahl von Testschritten (101-107) einen weiteren Verweis auf einen Prozess umfasst, der in der Softwarekomponente (84) implementiert ist, und sowohl die Testskriptspezifikation (110) als auch die neue Version der Testskriptspezifikation den weiteren Verweis umfassen.

6. System (1,41) nach einem der vorhergehenden Ansprüche, wobei der mindestens eine Prozessor (5,55,65) konfiguriert ist, den Testschritt (105) aus der neuen Version der Testskriptspezifikation auszulassen, wenn keine weitere Softwarekomponente der Softwareanwendung (93) die Prozessdefinition implementiert.

7. System (1,41) nach Anspruch 6, wobei der mindestens eine Prozessor (5,55,65) konfiguriert ist, den Testschritt (105) aus der neuen Version der Testskriptspezifikation auszulassen, wenn keine weitere Softwarekomponente der Softwareanwendung (93) die Prozessdefinition (88) implementiert und der Testschritt (105) als optional markiert ist, und eine Fehlermeldung zu erzeugen, wenn keine weitere Softwarekomponente der Softwareanwendung die Prozessdefinition (88) implementiert und der Testschritt (105) als obligatorisch markiert ist.

8. System (1,41) nach einem der vorhergehenden Ansprüche, wobei die Softwarekomponente (84) die Testskriptspezifikation (110) umfasst.

9. System (1,41) nach einem der vorhergehenden Ansprüche, wobei die Prozessdefinition (88) durch einen Prozess implementiert wird, der mit einer Schaltfläche verknüpft ist, die von der weiteren Softwarekomponente (83) bereitgestellt wird, oder durch einen Prozess, der spezifiziert, dass Daten in ein Feld (123-127) eingegeben werden müssen, das von der weiteren Softwarekomponente (83) bereitgestellt wird.

10. System (1,41) nach einem der Ansprüche 1 bis 8, wobei die Prozessdefinition (88) durch eine weitere Testskriptspezifikation implementiert wird, die in der weiteren Softwarekomponente (83) enthalten ist.

11. System (1,41) nach einem der vorhergehenden Ansprüche, wobei der mindestens eine Prozessor (5,55,65) konfiguriert ist, die weitere Softwarekomponente in einer Anwendungsspezifikation (91) zu suchen, die mit der Softwareanwendung (93) verknüpft ist, wobei die Anwendungsspezifikation (91) spezifiziert, dass die Softwareanwendung (93) eine oder mehrere Softwarekomponenten (83,84) umfasst, wobei die eine oder mehrere Softwarekomponenten (83,84) die Softwarekomponente (84) umfassen.

12. System (1,41) nach einem der vorhergehenden Ansprüche, wobei der mindestens eine Prozessor (5,55,65) konfiguriert ist, die Softwareanwendung (93) durch Simulation von Benutzereingaben gemäß den in dem Testskript (151) angegebenen Testschritten basierend auf anwendungsspezifischen Testdaten (153), die mit der Softwareanwendung (93) verknüpft sind, zu steuern.

13. System (1,41) nach einem der vorhergehenden Ansprüche, wobei der mindestens eine Prozessor (5,55,65) konfiguriert ist, zu überprüfen, ob die Softwareanwendung (93) auf die simulierten Benutzereingaben auf unerwartete Weise reagiert, und die Ergebnisse dieser Überprüfung zu melden.

14. Rechnerimplementiertes Verfahren zur automatischen Prüfung einer Softwareanwendung, während die Softwareanwendung ausgeführt wird, wobei das Verfahren Folgendes umfasst:
- Erhalten (201) einer Testskriptspezifikation, die mit einer Softwarekomponente der Softwareanwendung verknüpft ist, wobei die Testskriptspezifikation eine Vielzahl von Testschritten umfasst, wobei ein Testschritt der Vielzahl von Testschritten einen Verweis auf eine Prozessdefinition enthält, die in einem Katalog gespeichert ist und nicht von der Softwarekomponente implementiert wird,
- Bestimmen (203), ob eine weitere Softwarekomponente der Softwareanwendung die Prozessdefinition implementiert,
- Erstellen (205) einer neuen Version der Testskriptspezifikation, in der der Verweis auf die Prozessdefinition durch einen Verweis auf eine Implementierung der Prozessdefinition in der weiteren Softwarekomponente ersetzt wurde, wenn festgestellt wurde, dass die weitere Softwarekomponente die Prozessdefinition implementiert,
- Erstellen (207) eines Testskripts basierend auf der neuen Version der Testskriptspezifikation, und
- Steuern (209) der Softwareanwendung durch Simulation von Benutzereingaben gemäß den in dem Testskript angegebenen Testschritten.

15. Computerprogramm oder Suite von Computerprogrammen, die mindestens einen Softwarecodeabschnitt oder ein Computerprogrammprodukt speichern, das mindestens einen Softwarecodeabschnitt enthält, wobei der Softwarecodeabschnitt, wenn er auf einem Computersystem ausgeführt wird, für die Durchführung des Verfahrens nach Anspruch 14 konfiguriert ist.

## Revendications

1. Système (1, 41) pour le test automatique d'une application logicielle (93) tandis que ladite application logicielle (93) est en cours d'exécution, ledit système (1, 41) comprenant au moins un processeur (5, 55, 65) configuré pour :
- obtenir une spécification de script de test (110) associée à un composant logiciel (84) de ladite application logicielle (93), ladite spécification de script de test comprenant une pluralité d'étapes de test (101 à 107), une étape de test (105) de ladite pluralité d'étapes de test (101 à 107) comprenant une référence à une définition de processus (88) stockée dans un catalogue (81), ladite définition de processus (88) n'étant pas mise en œuvre par ledit composant logiciel (84),
- déterminer si un composant logiciel supplémentaire de ladite application logicielle (93) met en œuvre ladite définition de processus (88),
- créer une nouvelle version de ladite spécification de script de test (110) dans laquelle ladite référence à ladite définition de processus (88) a été remplacée par une référence à une mise en œuvre de ladite définition de processus (88) dans ledit composant logiciel supplémentaire (83) si ledit composant logiciel supplémentaire (83) a été déterminé comme mettant en œuvre ladite définition de processus (88),
- créer un script de test (105) sur la base de ladite nouvelle version de ladite spécification de script de test, et
- commander ladite application logicielle (93) par la simulation d'une entrée d'utilisateur selon lesdites étapes de test spécifiées dans ledit script de test (105).

2. Système (1, 41) selon la revendication 1, dans lequel ladite application logicielle (93) est en cours d'exécution sur un autre système (13) tandis que ladite application logicielle (93) est commandée par la simulation de ladite entrée d'utilisateur.

3. Système (1, 41) selon la revendication 1 ou 2, dans lequel ladite mise en œuvre de ladite définition de processus (88) dans ledit composant logiciel supplémentaire (83) est associée à un champ (123 à 127) ou à un bouton, ledit champ (123 à 127) ou bouton est associé à un identifiant, et ledit au moins un processeur (5, 55, 65) est configuré pour trouver, sur la base dudit identifiant, un élément dans une page web produite par ladite application logicielle (93) en cours d'exécution et commander ladite application logicielle par la simulation d'une entrée d'utilisateur sur ledit champ (123 à 127) ou bouton sur la base d'informations associées audit élément.

4. Système (1, 41) selon l'une quelconque des revendications précédentes, dans lequel ladite mise en œuvre de ladite définition de processus (88) dans ledit composant logiciel supplémentaire (83) est associée à un module d'extension d'interface utilisateur et à une fonction de test (137) dans ledit module d'extension d'interface utilisateur et ledit au moins un processeur (5, 55, 65) est configuré pour trouver ladite fonction de test (137) dans une page web produite par ladite application logicielle (93) en cours d'exécution et appeler ladite fonction de test (137) sur ladite page web.

5. Système (1, 41) selon l'une quelconque des revendications précédentes, dans lequel une étape de test supplémentaire (103) de ladite pluralité d'étapes de test (101 à 107) comprend une référence supplémentaire à un processus mis en œuvre dans ledit composant logiciel (84) et à la fois ladite spécification de script de test (110) et ladite nouvelle version de ladite spécification de script de test comprennent ladite référence supplémentaire.

6. Système (1, 41) selon l'une quelconque des revendications précédentes, dans lequel ledit au moins un processeur (5, 55, 65) est configuré pour omettre ladite étape de test (105) dans ladite nouvelle version de ladite spécification de script de test si aucun composant logiciel supplémentaire de ladite application logicielle (93) ne met en œuvre ladite définition de processus.

7. Système (1, 41) selon la revendication 6, dans lequel ledit au moins un processeur (5, 55, 65) est configuré pour omettre ladite étape de test (105) dans ladite nouvelle version de ladite spécification de script de test si aucun composant logiciel supplémentaire de ladite application logicielle (93) ne met en œuvre ladite définition de processus (88) et ladite étape de test (105) a été marquée comme facultative et générer un message d'erreur si aucun composant logiciel supplémentaire de ladite application logicielle ne met en œuvre ladite définition de processus (88) et ladite étape de test (105) a été marquée comme obligatoire.

8. Système (1, 41) selon l'une quelconque des revendications précédentes, dans lequel ledit composant logiciel (84) comporte ladite spécification de script de test (110).

9. Système (1, 41) selon l'une quelconque des revendications précédentes, dans lequel ladite définition de processus (88) est mise en œuvre par un processus qui a été associé à un bouton fourni par ledit composant logiciel supplémentaire (83) ou par un processus qui spécifie que des données doivent être entrées dans un champ (123 à 127) fourni par ledit composant logiciel supplémentaire (83).

10. Système (1, 41) selon l'une quelconque des revendications 1 à 8, dans lequel ladite définition de processus (88) est mise en œuvre par une spécification de script de test supplémentaire incluse dans ledit composant logiciel supplémentaire (83).

11. Système (1, 41) selon l'une quelconque des revendications précédentes, dans lequel ledit au moins un processeur (5, 55, 65) est configuré pour rechercher ledit composant logiciel supplémentaire dans une spécification d'application (91) associée à ladite application logicielle (93), ladite spécification d'application (91) spécifiant que ladite application logicielle (93) comprend un ou plusieurs composants logiciels (83, 84), lesdits un ou plusieurs composants logiciels (83, 84) comportant ledit composant logiciel (84) .

12. Système (1, 41) selon l'une quelconque des revendications précédentes, dans lequel ledit au moins un processeur (5, 55, 65) est configuré pour commander ladite application logicielle (93) par la simulation d'une entrée d'utilisateur selon lesdites étapes de test spécifiées dans ledit script de test (151) sur la base de données de test spécifiques à une application (153) associées à ladite application logicielle (93).

13. Système (1, 41) selon l'une quelconque des revendications précédentes, dans lequel ledit au moins un processeur (5, 55, 65) est configuré pour vérifier si ladite application logicielle (93) répond à ladite entrée d'utilisateur simulée d'une manière inattendue et rapporter les résultats de ladite vérification.

14. Procédé mis en œuvre par ordinateur de test automatique d'une application logicielle tandis que ladite application logicielle est en cours d'exécution, ledit procédé comprenant :
- l'obtention (201) d'une spécification de script de test associée à un composant logiciel de ladite application logicielle, ladite spécification de script de test comprenant une pluralité d'étapes de test, une étape de test de ladite pluralité d'étapes de test comprenant une référence à une définition de processus stockée dans un catalogue, ladite définition de processus n'étant pas mise en œuvre par ledit composant logiciel ;
- la détermination (203) de si un composant logiciel supplémentaire de ladite application logicielle met en œuvre ladite définition de processus ;
- la création (205) d'une nouvelle version de ladite spécification de script de test dans laquelle ladite référence à ladite définition de processus a été remplacée par une référence à une mise en œuvre de ladite définition de processus dans ledit composant logiciel supplémentaire si ledit composant logiciel supplémentaire a été déterminé comme mettant en œuvre ladite définition de processus ;
- la création (207) d'un script de test sur la base de ladite nouvelle version de ladite spécification de script de test ; et
- la commande (209) de ladite application logicielle par la simulation d'une entrée d'utilisateur selon lesdites étapes de test spécifiées dans ledit script de test.

15. Programme d'ordinateur ou suite de programmes d'ordinateur comprenant au moins une partie de code logiciel ou un produit-programme d'ordinateur stockant au moins une partie de code logiciel, la partie de code logiciel, lors de son exécution sur un système d'ordinateur, étant configurée pour la réalisation du procédé selon la revendication 14**.**
